(19) Europäisches Patentamt
European Patent Office
Office européen des brevets

(11) Numéro de publication: **0 413 793 B1**

# (12) FASCICULE DE BREVET EUROPEEN

(45) Date de publication de fascicule du brevet: **14.09.94**

(51) Int. Cl.5: **A01N 25/30**, A01N 25/24

(21) Numéro de dépôt: **90903844.0**

(22) Date de dépôt: **15.02.90**

(86) Numéro de dépôt internationale :
**PCT/FR90/00109**

(87) Numéro de publication internationale :
**WO 90/09103 (23.08.90 90/20)**

Le dossier contient des informations techniques présentées postérieurement au dépôt de la demande et ne figurant pas dans le présent fascicule.

## (54) NOUVELLES EMULSIONS AOUEUSES CONCENTREES, LEUR PROCEDE DE PREPARATION ET LEUR APPLICATION DANS LE DOMAINE PESTICIDE.

(30) Priorité: **17.02.89 FR 8902092**

(43) Date de publication de la demande:
**27.02.91 Bulletin 91/09**

(45) Mention de la délivrance du brevet:
**14.09.94 Bulletin 94/37**

(84) Etats contractants désignés:
**AT BE CH DE DK ES FR GB IT LI LU NL SE**

(56) Documents cités:
**EP-A- 0 022 666** **EP-A- 0 118 759**
**EP-A- 0 190 995** **EP-A- 0 197 293**
**EP-A- 0 224 846** **FR-A- 2 599 220**

(73) Titulaire: **ROUSSEL-UCLAF**
**35, Boulevard des Invalides**
**F-75007 Paris (FR)**

(72) Inventeur: **MEINARD, Colette**
**24, avenue Petite-Suisse**
**F-13012 Marseille (FR)**
Inventeur: **SUGLIA, Jean-Claude**
**"Le Deven" no 13**
**F-13112 La Destrousse (FR)**
Inventeur: **TARANTA, Claude**
**La Parade**
**Bâtiment Camus**
**F-13090 Aix-en-Provence (FR)**

(74) Mandataire: **Tonnellier, Marie-José et al**
**Département des Brevets**
**ROUSSEL UCLAF**
**B.P. no 9**
**F-93230 Romainville (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 413 793 B1

## Description

La présente invention concerne de nouvelles émulsions aqueuses concentrées, leur procédé de préparation et leur application dans le domaine pesticide.

On connaissait déjà des émulsions aqueuses (cf EP-A-0 118759) renfermant un pesticide, un agent tensio-actif choisi dans le groupe des éthers phosphates acides et un agent filmogène appartenant à la famille des alcools polyvinyliques.

L'invention a pour objet des émulsions aqueuses concentrées renfermant un pyréthrinoïde, caractérisées en ce qu'elles renferment en plus des constituants habituels des émulsions aqueuses et du principe actif, un agent filmogène et un agent tensioactif choisi dans le groupe des éthers phosphates acides de formule :

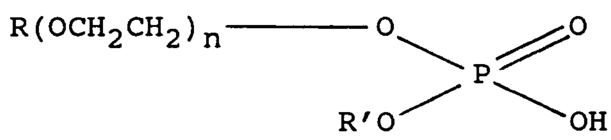

dans laquelle R' représente un atome d'hydrogène, ou représente un radical $R(OCH_2CH_2)_n$, R représentant un radical alkyle renfermant jusqu'à 18 atomes de carbone, un radical aryle renfermant jusqu'à 14 atomes de carbone, ou un radical alkylaryle renfermant jusqu'à 24 atomes de carbone et n représentant un nombre entier pouvant varier de 1 à 18. Comme exemple de radical R préféré, on peut citer le radical :

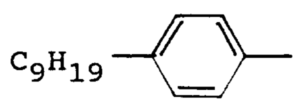

Les émulsions aqueuses concentrées de l'invention trouvent leur utilisation dans de nombreux domaines notamment le domaine des pesticides. Elles permettent un effet biologique immédiat et une bonne persistance d'action, c'est cette double action immédiate et persistante qui est la caractéristique essentielle des émulsions de l'invention et permet leur utilisation dans le domaine agricole où elles peuvent former un film protecteur sur les végétaux après évaporation de l'eau de dilution.

L'invention a plus particulièrement pour objet les émulsions aqueuses concentrées, caractérisées en ce que l'agent filmogène est une résine vinylique thermoplastique.

Les résines vinyliques thermoplastiques se distinguent par leur solubilité dans l'eau et leur insolubilité dans presque tous les solvants organiques. De plus, ces résines assurent simultanément la double fonction d'agent épaississant et stabilisant et d'agent filmogène.

Parmi les résines thermoplastiques préférées, on peut citer les résines appartenant à la famille des alcools polyvinyliques ou encore des résines dérivées de la polyvinylpyrrolidone. Ces résines assurent simultanément la double fonction d'agent filmogène et d'agent épaississant, stabilisant.

Parmi les émulsions aqueuses préférées, on peut citer les émulsions caractérisées en ce qu'elles renferment l'agent filmogène, le tensioactif, un couple de solvants apolaires, de l'eau et un cotensioactif.

Dans un mode de réalisation préféré le couple de solvants doit présenter les caractéristiques suivantes :

- dissoudre la matière active bien sûr ;
- ne pas être miscible dans l'eau ;
- ne pas être trop volatil de façon à contribuer à la persistance de la matière active ;
- éviter la cristallisation de la matière active au cours des stockages prolongés à basse température ;
- avoir une densité voisine de 1.

Le couple de solvants peut ainsi être constitué d'une part par un hydrocarbure aromatique comme par exemple le "SOLVESSO 150", d'autre part par un dérivé de l'acide phtalique à savoir un mono ou diester de l'acide phtalique et de formule :

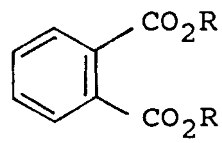

dans lequel R et R' identiques ou différents représentent un radical alkyle renfermant jusqu'à 8 atomes de carbone par exemple un radical méthyle, éthyle, n-propyle, isopropyl ou n-butyle.

Le cosolvant est de préférence un diol comme par exemple le propane diol 1,2.

Parmi les pyréthrinoïdes préférés, on peut citer la deltaméthrine, la perméthrine, la cyperméthrine, l'alphaméthrine, la tralométhrine, la cyhalothrine, le fenvalérate, la cyfluthrine, le flucythrinate, le fluvalinate, la fenpropathrine, la téfluthrine et la bifenthrine.

On peut également citer les pyréthrinoïdes décrits et revendiqués dans les brevets européens 0038271, 0041021, 0048186, 0050534, 0110769, 01141012, 281439 et le brevet français 253639 et notamment le (1R,cis)-3-[(E)-2-fluoro 3-méthoxy 3-oxo 1-propényl] 2,2-diméthyl cyclopropanecarboxylate de 1,2,3,4,5-pentafluoro benzyle ; ou le (1R,cis)-2,2-diméthyl-3-[(Z)-3-oxo 3-[2,2,2-trifluoro 1-(trifluorométhyl) éthoxy] 1-propényl] cyclopropanecarboxylate de (S)-alpha-cyano 3-phénoxy benzyle.

Les émulsions aqueuses concentrées préférées renferment :

- de 0,01 g à 250 g/l de pyréthrinoïde ;
- de 0 g à 350 g/l d'hydrocarbures aromatiques ;
- de 0 g à 350 g/l d'ester phtalique ;
- de 40 g à 200 g/l d'éther phosphate acide ;
- de 30 g à 200 g/l de propanediol 1,2 ;
- de 30 g à 150 g/l de résines d'alcools vinyliques ;
- de 40 g à 600 g/l d'eau.

L'invention a également pour objet un procédé caractérisé en ce que :

- l'on prépare une solution A en dissolvant la matière active dans un ou des solvants et en ajoutant le tensioactif ;
- l'on prépare une solution B renfermant l'agent filmogène, l'eau et le cotensioactif puis mélange les solutions 1 et B sous agitation pour obtenir l'émulsion aqueuse recherchée.

Il est possible d'ajouter des produits :

- antimousse, des produits mouillants, des produits anti-UV ;
- et/ou des produits bactéricides

sous forme liquide ou poudre en phase aqueuse ou organique (selon leur solubilité) au cours de la préparation.

Les exemples suivants illustrent l'invention sans toutefois la limiter.

**Exemples de 1 à 6**

On a réalisé les émulsions aqueuses concentrées en utilisant comme principe actif :

- le (1R,cis)-2,2-diméthyl-3-[(Z)-3-oxo 3-[2,2,2-trifluoro 1-(trifluorométhyl) éthoxy] 1-propényl] cyclopropanecarboxylate de (S)-alpha-cyano 3-phénoxy benzyle dénommé ci-après produit A en suivant le schéma suivant :

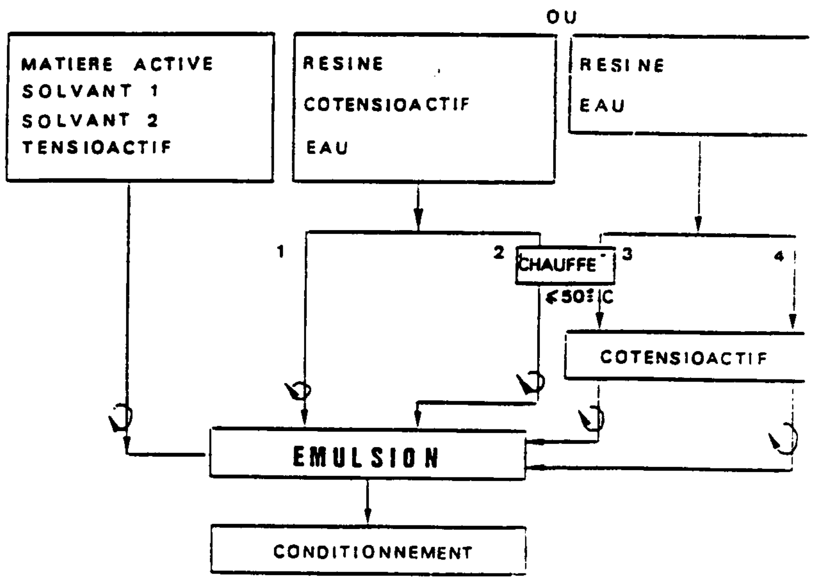


(1) La dissolution du polymère en phase aqueuse est beaucoup plus longue.

(2) (3) Après l'opération de "chauffe" un réajustement à température ambiante de la phase aqueuse est souhaitable avant de procéder au mélange.

(4) La solution présente probablement la plus grande rapidité de dissolution sans recourir à un traitement thermique.

Les détails des constituants des diverses émulsions préparés sont résumés dans le tableau suivant :

| | Emulsion - aqueuse -concentrée (concentrations en g/l) | | | | | |
|---|---|---|---|---|---|---|
| Ingrédients de formulation | N° 1 | N° 2 | N° 3 | N° 4 | N° 5 | N° 6 |
| PRODUIT A | 100 | 150 | 150 | 150 | 150 | 150 |
| SOLVESSO 150 | 52,5 | 100 | 100 | 100 | 100 | 100 |
| PHTALATE DE METHYLE | 127,5 | 0 | 0 | 0 | 0 | 0 |
| PHTALATE D'ETHYLE | 0 | 100 | 100 | 100 | 100 | 100 |
| AGRILAN F 546 | 120 | 0 | 0 | 0 | 0 | 0 |
| EMPHOS CS 136 | 0 | 70 | 0 | 0 | 0 | 0 |
| BEYCOSTAT QA | 0 | 0 | 70 | 0 | 60 | 0 |
| ESGANE 6236 A | 0 | 0 | 0 | 70 | 0 | 60 |
| PROPANEDIOL 1,2 | 110 | 108.5 | 108,5 | 108,5 | 104 | 104 |
| MOWIOL 4/88 | 90 | 0 | 0 | 0 | 0 | 0 |
| MOWIOL 18/88 | 0 | 0 | 0 | 0 | 48 | 48 |
| LUVISKOL K 90 | 0 | 41,5 | 41,5 | 41,5 | 0 | 0 |
| EAU | 450 | 480 | 480 | 480 | 488 | 488 |

| | |
|---|---|
| SOLVESSO 150 : | Hydrocarbure aromatique |
| AGRILAN F 546<br>EMPHOS CS 136<br>BEYCOSTAT QA<br>ESGANE 6236A | Tensioactifs de type "R-Ether phosphate acide" |
| MOWIOL 4/88<br>MOWIOL 18/88 | Alcools polyvinyliques de poids moléculaires différents mais avec un indice de saponification identique |
| LUVISKOL K 90 | Polyvinyl pyrrolidone avec un indice K compris entre 88 et 96 |

Essai biologique :

Les émulsions de l'invention ont été comparées à une formulation classique de type concentré émulsifiable.

Les essais ont été effectués sur acariens du pommier : Panonychus Ulmi.

Les formulations de l'invention se sont montrées supérieures en action de choc et en persistance d'action.

Au bout de 20 jours, les formulations de l'invention sont encore efficaces contrairement aux formulations classiques.

**Revendications**

**1.** Emulsions aqueuses concentrées renfermant un pyréthrinoïde, caractérisées en ce qu'elles renferment en plus des constituants habituels des émulsions aqueuses et du principe actif, un agent filmogène et un agent tensioactif choisi dans le groupe des éthers phosphates acides de formule :

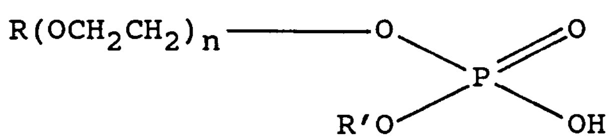

dans laquelle R' représente un atome d'hydrogène, ou représente un radical $R(OCH_2CH_2)_n$, R représentant un radical alkyle renfermant jusqu'à 18 atomes de carbone, un radical aryle renfermant jusqu'à 14 atomes de carbone, ou un radical alkylaryle renfermant jusqu'à 24 atomes de carbone et n représentant un nombre entier pouvant varier de 1 à 18.

**2.** Emulsions aqueuses concentrées selon la revendication 1, caractérisées en ce que l'agent filmogène est une résine vinylique thermoplastique.

**3.** Emulsions aqueuses concentrées selon la revendication 2, caractérisées en ce que la résine vinylique thermoplastique appartient à la famille des alcools polyvinyliques.

**4.** Emulsions aqueuses concentrées selon la revendication 2, caractérisées en ce que la résine vinylique thermoplastique est un dérivé de la vinylpyrrolidone.

5. Emulsions aqueuses concentrées selon l'une quelconque des revendications 1 à 4, caractérisées en ce qu'elles renferment l'agent filmogène, le tensioactif, un couple de solvants apolaires de l'eau et un cotensioactif.

6. Emulsions aqueuses concentrées selon une quelconque des revendications 1 à 5, caractérisées en ce que le pyréthrinoïde est la deltaméthrine, la perméthrine, la cyperméthrine, l'alphaméthrine, la tralométhrine, la cyhalothrine, le fenvalérate, la cyfluthrine, le flucythrinate, le fluvalinate, la fenpropathrine, la téfluthrine et la bifanthrine.

7. Emulsions aqueuses concentrées selon une quelconque des revendications 1 à 5, caractérisées en ce que le pyréthroïde est le (1R,cis)-3-[(E)-2-fluoro 3-méthoxy 3-oxo 1-propényl] 2,2-diméthyl cyclopropanecarboxylate de 1,2,3,4,5-pentafluoro benzyle ;
ou le (1R,cis)-2,2-diméthyl-3-[(Z)-3-oxo 3-[2,2,2-trifluoro 1-(trifluorométhyl) éthoxy] 1-propényl] cyclopropanecarboxylate de (S)-alpha-cyano 3-phénoxy benzyle.

8. Emulsions aqueuses concentrées caractérisées en ce qu'elles renferment :
   - de 0,01 g à 250 g/l de pyréthrinoïde ;
   - de 0 g à 350 g/l d'hydrocarbures aromatiques ;
   - de 0 g à 350 g/l d'ester phtalique ;
   - de 40 g à 200 g/l d'éther phosphate acide ;
   - de 30 g à 200 g/l de propanediol 1,2 ;
   - de 30 g à 150 g/l de résines d'alcools vinyliques ;
   - de 40 g à 600 g/l d'eau.

9. Procédé de préparation des émulsions aqueuses concentrées selon l'une quelconque des revendications 1 à 8, caractérisées en ce que :
   - l'on prépare une solution A en dissolvant la matière active dans un ou des solvants et en ajoutant le tensioactif ;
   - l'on prépare une solution B renfermant l'agent filmogène, l'eau et le cotensioactif puis mélange les solutions A et B sous agitation pour obtenir l'émulsion aqueuse recherchée.

## Claims

1. Concentrated aqueous emulsions containing a pyrethrinoid, characterized in that they contain in addition to the usual constituents of aqueous emulsions and an active ingredient, a film-forming agent and a surfactant chosen from the group of acid phosphate ethers of formula:

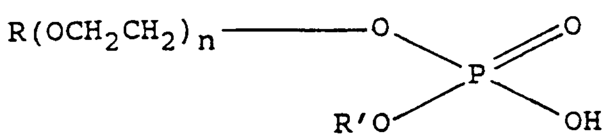

in which R' represents a hydrogen atom or represents an $R(OCH_2CH_2)_n$ radical, R representing an alkyl radical containing up to 18 carbon atoms, an aryl radical containing up to 14 carbon atoms, or an alkylaryl radical containing up to 24 carbon atoms and n representing an integer which can vary from 1 to 18.

2. Concentrated aqueous emulsions according to claim 1, characterized in that the film-forming agent is a thermoplastic vinyl resin.

3. Concentrated aqueous emulsions according to claim 2, characterized in that the thermoplastic vinyl resin belongs to the family of polyvinyl alcohols.

4. Concentrated aqueous emulsions according to claim 2, characterized in that the thermoplastic vinyl resin is a derivative of vinylpyrrolidone.

**5.** Concentrated aqueous emulsions according to any one of claims 1 to 4, characterized in that they contain the film-forming agent, the surfactant, a pair of non-polar solvents, water and a cosurfactant.

**6.** Concentrated aqueous emulsions according to any one of claims 1 to 5, characterized in that the pyrethrinoid is deltamethrin, permethrin, cypermethrin, alphamethrin, tralomethrin, cyhalothrin, fenvalerate, cyfluthrin, flucythrinate, fluvalinate, fenpropathrin, tefluthrin and bifenthrin.

**7.** Concentrated aqueous emulsions according to any one of claims 1 to 5, characterized in that the pyrethrinoid is 1,2,3,4,5-pentafluoro benzyl (1R,cis)-3-[(E)-2-fluoro 3-methoxy 3-oxo 1-propenyl] 2,2-dimethyl cyclopropanecarboxylate;
or (S)-alpha-cyano 3-phenoxy benzyl (1R,cis)-2,2-dimethyl-3-
[(Z)-3-oxo 3-[2,2,2-trifluoro 1-(trifluoromethyl) ethoxy] 1-propenyl] cyclopropanecarboxylate.

**8.** Concentrated aqueous emulsions characterized in that they contain:
- from 0.01 g to 250 g/l of pyrethrinoid;
- from 0 g to 350 g/l of aromatic hydrocarbons;
- from 0 g to 350 g/l of phthalic ester;
- from 40 g to 200 g/l of acid phosphate ether;
- from 30 g to 200 g/l of 1,2-propanediol;
- from 30 g to 150 g/l of vinyl alcohol resins;
- from 40 g to 600 g/l of water.

**9.** Preparation process for concentrated aqueous emulsions according to any one of claims 1 to 8, characterized in that:
- a solution A is prepared by dissolving the active ingredient in one or more solvents and adding the surfactant;
- a solution B is prepared containing the film-forming agent, water and the cosurfactant, then solutions A and B are mixed under agitation in order to obtain the desired aqueous emulsion.

## Patentansprüche

**1.** Konzentrierte wäßrige Emulsionen, umfassend ein Pyrethrinoid, dadurch gekennzeichnet, daß sie außer den üblichen Bestandteilen der wäßrigen Emulsionen und des Wirkstoffes ein filmbildendes Mittel und ein Tensid umfassen, ausgewählt aus der Gruppe der sauren Phosphat-Ether der Formel

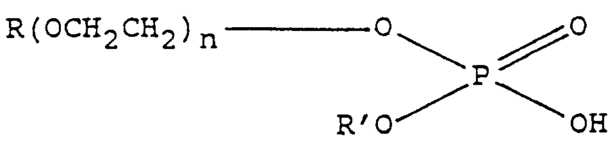

in der R' ein Wasserstoffatom oder einen Rest $R(OCH_2CH_2)_n$ darstellt, R einen Alkylrest mit bis zu 18 Kohlenstoffatomen, einen Arylrest mit bis zu 14 Kohlenstoffatomen oder einen Alkylarylrest mit bis zu 24 Kohlenstoffatomen bedeutet und n eine ganze zahl ist, die zwischen 1 und 18 variieren kann.

**2.** Konzentrierte wäßrige Emulsionen nach Anspruch 1, dadurch gekennzeichnet, daß das filmbildende Mittel ein thermoplastisches Vinylharz ist.

**3.** Konzentrierte wäßrige Emulsionen nach Anspruch 2, dadurch gekennzeichnet, daß das thermoplastische Vinylharz aus der Familie der Polyvinylalkohole stammt.

**4.** Konzentrierte wäßrige Emulsionen nach Anspruch 2, dadurch gekennzeichnet, daß das thermoplastische Vinylharz ein Vinylpyrrolidon-Derivat ist.

**5.** Konzentrierte wäßrige Emulsionen nach irgendeinem der Ansprüche 1 bis 4, dadurch gekennzeichnet, daß sie das filmbildende Mittel, das Tensid, ein Paar apolarer Lösungsmittel, Wasser und ein Cotensid umfassen.

**6.** Konzentrierte wäßrige Emulsionen nach irgendeinem der Ansprüche 1 bis 5, dadurch gekennzeichnet, daß das Pyrethrinoid Deltamethrin, Permethrin, Cypermethrin, Alphamethrin, Tralomethrin, Cyhalothrin, Fenvalerat, Cyfluthrin, Flucythrinat, Fluvalinat, Fenpropathrin, Tefluthrin und Bifanthrin ist.

**7.** Konzentrierte wäßrige Emulsionen nach irgendeinem der Ansprüche 1 bis 5, dadurch gekennzeichnet, daß das Pyrethrinoid (1R, cis)-3-[(E)-2-Fluor-3-methoxy-3-oxo-1-propenyl]-2,2-dimethyl-cyclopropancarbonsäure-1,2,3,4,5-pentafluor-benzylester oder (1R,cis)-2,2-Dimethyl-3-{(Z)-3-oxo-3-[2,2,2-trifluor-1-(trifluormethyl)-ethoxy]-1-propenyl}-cyclopropancarbonsäure-(S)-α-cyano-3-phenoxy-benzylester ist.

**8.** Konzentrierte wäßrige Emulsionen, dadurch gekennzeichnet, daß sie umfassen:
- 0,01 g bis 250 g/l Pyrethrinoid;
- 0 g bis 350 g/l aromatische Kohlenwasserstoffe;
- 0 g bis 350 g/l Phthalsäureester;
- 40 g bis 200 g/l sauren Phosphat-Ether;
- 30 g bis 200 g/l 1,2-Propandiol;
- 30 g bis 150 g/l Harze von Vinylalkoholen;
- 40 g bis 600 g/l Wasser.

**9.** Verfahren zur Herstellung der konzentrierten wäßrigen Emulsionen nach irgendeinem der Ansprüche 1 bis 8, dadurch gekennzeichnet, daß man
- eine Lösung A herstellt, indem man den Wirkstoff in einem oder den Lösungsmitteln löst und das Tensid hinzusetzt;
- eine Lösung B herstellt, die das filmbildende Mittel, Wasser und das Cotensid umfaßt,

und man anschließend die Lösungen A und B unter Rühren mischt, um die gesuchte wäßrige Emulsion zu erhalten.